# EUROPÄISCHE PATENTSCHRIFT

(11) **EP 0 899 676 B1**
(45) Veröffentlichungstag und Bekanntmachung des Hinweises auf die Patenterteilung: **15.12.2004**
(21) Anmeldenummer: 98113340.8
(22) Anmeldetag: 17.07.1998
(51) Int. Cl.: G06K 7/00, G06K 13/08

(54) **Flach bauende Datenkartenaufnahme**
Thin receptacle for data cards
Réceptacle de faible épaisseur pour cartes de données

(30) Priorität: 29.07.1997 DE 19732583
(43) Veröffentlichungstag der Anmeldung: 03.03.1999
(73) Patentinhaber: SIEMENS AKTIENGESELLSCHAFT, 80333 München (DE)
(72) Erfinder: Burkart, Harald. Dipl.-Ing. (FH), 78054 Villingen-Schwenningen (DE)

(56) Entgegenhaltungen:
- EP-A- 0 696 776
- US-A- 5 146 070
- US-A- 5 179 504

## Beschreibung

Die Erfindung betrifft eine flach bauende Datenkartenaufnahme mit einem in der Frontwand befindlichen Eingabe/Ausgabeschlitz und mit einer Vorrichtung zum Verschließen des Eingabe-/Ausgabeschlitzes gemäß dem Oberbegriff des Anspruchs 1.

Mit einer derartigen Vorrichtung soll in erster Linie vermieden werden, dass die Datenübertragung zwischen einem Datenerfassungsgerät und einer Datenkarte in betrügerischer Absicht gestört werden kann. Das heißt, dass während der Datenübertragung eine Datenkarte kurzzeitig gezogen und wieder gesteckt wird oder, dass die Kontaktierung der Datenkarte unterbrechende Folien oder elektrisch leitendes Material in den Eingabeschlitz eingeführt werden. Auf der anderen Seite ist das Verschließen des Eingabe-/Ausgabeschlitzes zweckmäßig, wenn in dem Einsatzmilieu der Datenkartenaufnahme bzw. dem Gerät, in dem die Datenkartenaufnahme eingebaut ist, eine relativ hohe Verschmutzungsgefahr besteht oder die Gefahr von Lageänderungen der Datenkarten durch Erschütterungen gegeben ist.

Eine Anordnung der eingangs genannten Art ist bereits aus dem US-Patent US 5,146,070 bekannt, welche sich jedoch nicht für eine flache Bauweise eignet. Gleichermaßen ungeeignet für eine flache Bauweise in Serie und die rauen Betriebsbedingungen in einem Kraftfahrzeug sind die in den Dokumenten US 5,179,504 und EP 0 696 776 A2 vorgeschlagenen Anordnungen. Derartige Anforderungen an eine Datenkartenaufnahme sind beispielsweise bei der Erfassung von Fahrtdaten in Kraftfahrzeugen gegeben, wo, wie aus der EP 0 191 413 B1 hervorgeht, den Fahrern mit Halbleiterspeichern versehene Datenkarten zugeordnet sind, welche der fahrerbezogenen Speicherung der Arbeits- und Ruhezeiten dienen. Dabei kann die Datenkartenaufnahme in einem Fahrtschreiber integriert oder als autonomes Aggregat im Armaturenbrett eines Kraftfahrzeuges angeordnet sein. Jedenfalls muss diese im haptischen Bereich der Fahrer angeordnet sein, wo eine erhebliche Verschmutzungsgefahr und Raumnot herrschen.

Dies hat zur Folge und stellt gleichzeitig die zu lösende Aufgabe dar, dass die betreffende Datenkartenaufnahme, insbesondere die Vorrichtung zum Verschließen des Eingabe/Ausgabeschlitzes bei den in einem Kraftfahrzeug gegebenen rauen Betriebsbedingungen eine verlässliche Funktion bietet und konstruktiv derart ausgestaltet ist, dass sie, um vielseitig verwendbar zu sein, ein Minimum an Bauhöhe aufweist, serientauglich ist und kostengünstig hergestellt werden kann sowie ausreichend Schutz gegen Manipulationen bietet.

Die Lösung der gestellten Aufgabe ist erfindungsgemäß durch die Merkmale des Anspruchs 1 gegeben.

Vorteilhafte Ausgestaltungen der Erfindung beschreiben die Unteransprüche.

Die gefundene Lösung bietet insbesondere den Vorteil einer extrem geringen Bauhöhe, so dass die betreffende Datenkartenaufnahme auch in einem Fahrtschreiber untergebracht werden kann, der ein flaches, beispielsweise den Abmessungen eines Radiofachs entsprechendes Einbaugehäuse aufweist. Besonders erwähnenswert ist ferner der von der Sorgfalt eines Benutzers unabhängige Transport einer eingegebenen Datenkarte in eine eindeutige Lese-/Schreibposition, die stetige kraftschlüssige und somit vibrationsfreie Verbindung einer eingegebenen Datenkarte mit den Transportmitteln sowie die stetige getriebliche Verbindung zwischen den Transportrollen und dem antreibendem Motor. Dabei bedingt gerade die vorgesehene Transporteinrichtung, insbesondere die verschachtelte Getriebeverbindung sowie die Art und Weise der Betätigung des Verschlußelementes mittels eines axial verschiebbaren Getriebelementes, beispielsweise mittels einer Schnecke/Schneckenradverbindung die angestrebte geringe Bauhöhe. Gegebenenfalls kann der antreibende Motor in einem rückwärtigen Bereich des Gerätes angeordnet werden, so daß er die Bauhöhe der Datenkartenaufnahme nicht mitbestimmt.

Vorteilhaft ist ferner die Maßnahme als Verschlußelement eine drehbar gelagerte, aber lediglich einen kleinen Schwenkwinkel ausführende Schwinge vorzusehen, die im wesentlichen in der Führungsebene der Datenkarten gelagert ist. Dabei liegt die Schwinge bzw. der die Schenkel der Schwinge verbindende Steg im nichtbetätigten Zustand und somit im Schließzustand an einer dem Eingabe-/Ausgabeschlitz zugeordneten, gehäusefesten Leiste an. Die Andruckkraft liefern auf der Schwinge drehbar gelagerte Andruckelemente, von denen jedes einen Federschenkel und einen einer Transportrolle zugeordneten Druckarm aufweist, wobei in vorteilhafter Weise der Federschenkel und der Druckarm einstückig ausgebildet sind. Bei dem nachfolgend zeichnerisch dargestellten, bevorzugten Ausführungsbeispiel ist die Schwinge außerdem derart ausgebildet und gelagert, daß die Schenkel den Datenkarten als Seitenführung dienen. Ferner ist der Steg der Schwinge in Richtung des Eingabe-/Ausgabeschlitzes keilförmig ausgebildet, um das Eingeben einer Datenkarte von Hand zu erleichtern. Die in bezug auf die Datenkartenaufnahme nach innen weisende Wand des Steges ist demgegenüber senkrecht zur Führungsebene der Datenkarten ausgebildet, und zwar derart, daß sie gemeinsam mit den Schenkeln der Schwinge eine eine eingelegte Datenkarte mit geringem Spiel umgreifende Fassung darstellt, wenn sich die Schwinge in ihrer Schließstellung befindet. Der Schwinge ist somit eine Art Widerhakenfunktion zugeordnet. Um den Eingabe/Ausgabeschlitz für eine Ausgabe einer Datenkarte freizumachen, ist lediglich eine Umsteuerung der Drehrichtung der Motorwelle erforderlich, die beispielsweise durch eine Tastenbetätigung ausgelöst werden kann. Bezüglich des bevorzugten Ausführungsbeispiels ist vorteilhaft hervorzuheben, daß an der symmetrisch ausgebildeten Schwinge Achsen angeformt sind, die je nach Einbauposition der Datenkartenaufnahme entweder eine den Motor steuernde Lichtschranke schalten oder dem Riegel und der diesem zugeordneten Schenkelfeder als Lagerung dienen.

Der Vollständigkeit halber sei noch erwähnt, daß der automatische Transport der Datenkarten im Gegensatz zu einem vollständigen Einführen der Datenkarten von Hand, eine schwächere Dimensionierung der Bauteile gestattet und somit zur Kostenreduzierung beiträgt.

Im folgenden sei die Erfindung anhand der Zeichnungen näher erläutert. Es zeigen:
- Figur 1: eine Draufsicht der Funktionselemente der erfindungsgemäßen Datenkartenaufnahme in ihrer funktionelen Zuordnung,
- Figur 2: eine teilweise Seitenansicht der Figur 1 in einem Funktionszustand der Bauelemente bei nicht eingelegter Datenkarte,
- Figur 3: eine teilweise Seitenansicht der Figur 1 in einem Funktionszustand der Bauelemente bei eingelegter Datenkarte,
- Figur 4: eine teilweise Seitenansicht der Figur 1 in einem Funktionszustand der Bauelemente während der Ausgabe einer Datenkarte,
- Figur 5: eine Seitenansicht der Figur 1 mit einer Ausbildung der Schwinge für eine unmittelbare Betätigung durch die Schnecke.

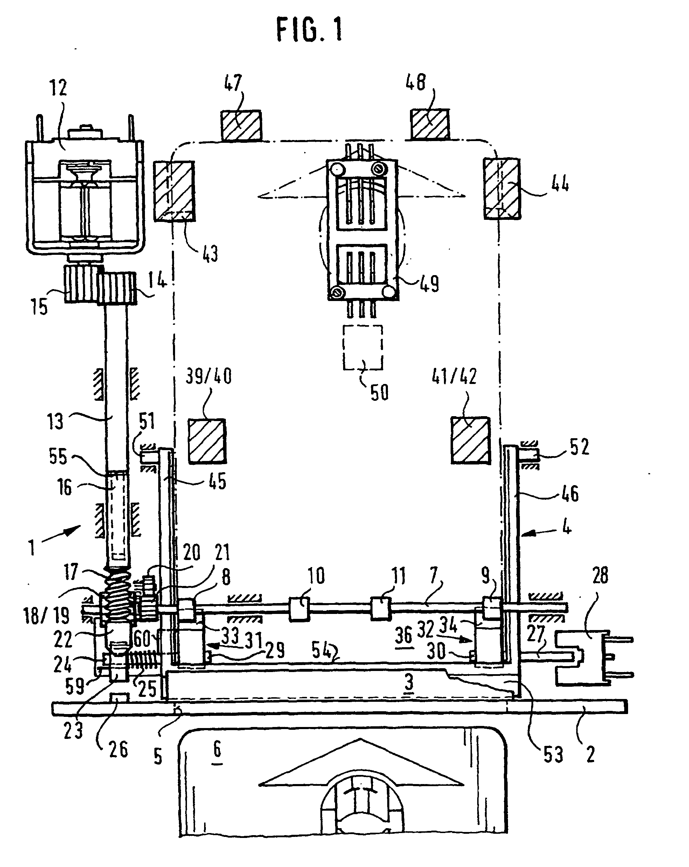

Wie aus der die wesentlichen Funktionselemente zeigenden Figur 1 hervorgeht, ist der Datenkartenaufnahme 1 eine Frontwand 2 oder eine Frontwand eines Gerätes, in welchem die Datenkartenaufnahme 1 eingebaut ist, zugeordnet. An der Frontwand 2 ist eine nach innen weisende Leiste 3 ausgebildet, an welcher eine unter nachfolgend noch zu beschreibender Federwirkung stehende Schwinge 4 anliegt. Mit 5 ist ein in der Frontwand 2 ausgebildeter Eingabe-/Ausgabeschlitz bezeichnet; 6 stellt eine im Zustand des Eingebens dargestellte Datenkarte dar. Auf einer mit 7 bezeichneten Welle sind dem Einzug der Datenkarte 6 dienende Transportrollen 8 und 9 befestigt. Weitere Rollen 10 und 11 haben lediglich Führungsfunktion. Die Welle 7 steht in getrieblicher Verbindung mit einem Motor 12, wobei die getriebliche Verbindung eine Übertragungswelle 13 vorsieht, welche einerseits über ein Zahnrad 14 mit einem auf der Motorwelle befestigten Ritzel 15 getrieblich verbunden ist andererseits teilweise als Profilwelle ausgebildet ist und auf dem betreffenden Wellenabschnitt 16 eine axial verschiebbare Schnecke 17 trägt. Die Schnecke 17 steht ihrerseits in Eingriff mit einem Zahnrad 18, welches über ein gleichachsig angeordnetes Zahnrad 19 sowie ein Zwischenrad 20 mit einem auf der Welle 7 befestigtem Zahnrad 21 kämmt. Vorzugsweise ist zur Lagerung der Schnecke 17 sowie der Zahnräder 18/19 und 20 ein mit geeigneten Achsen bzw. mit einer Lagerbohrung versehener Lagerkörper vorgesehen.

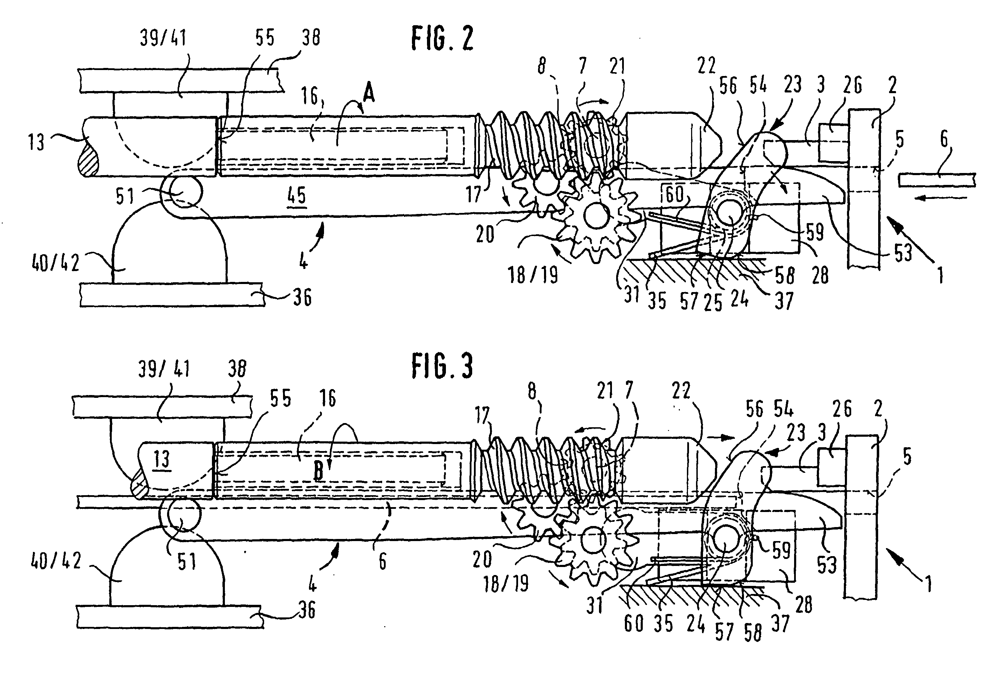

Wie die Figur 1 ferner zeigt, ist die Schnecke 17 mit einem in geeigneter Weise gerundeten oder konisch ausgebildeten Kopfteil 22 versehen, welches mit einem Riegel 23 zusammenwirkt. Letzterer ist auf einer an der Schwinge 4 angeformten Achse 24 schwenkbar gelagert und steht unter der Wirkung einer ebenfalls auf der Achse 24 aufgenommenen Schenkelfeder 25. Mit 26 ist ein an der Frontwand 2 angeformter, der Schnecke 17 zugeordneter Anschlag bezeichnet. An der Schwinge 4 ist symmetrisch zur Achse 24 eine weitere Achse 27 angeformt, welche mit einer Lichtschranke 28 zusammenwirkt. Durch die symmetrische Ausbildung der Schwinge 4 läßt sich die Anbringung des Riegels 23 und des Antriebes der Welle 7 je nach Einbaulage der Datenkartenaufnahme 1 in einen Gerät wahlweise vornehmen. Außerdem sind an der Schwinge 4 Achsen 29 und 30 angeformt, auf denen den Transportrollen 8 und 9 zugeordnete Andruckelemente 31 und 32 schwenkbar gelagert sind. Die Andruckelemente 31 und 32 bestehen jeweils aus einem Druckarm 33 bzw. 34 und einem Federschenkel, von denen einer in den Figuren 2 bis 5 mit 35 bezeichnet ist. Die Federschenkel 35 stützen sich im Funktionsstand auf einer Bodenplatte der Datenkartenaufnahme 1 oder auf einem Gehäuseboden eines Gerätes, in dem die Datenkartenaufnahme 1 eingebaut ist, bzw. auf jeweils einem an dem Gehäuseboden 36 angebrachten Stützkörper 37 (Figuren 2-5) ab. Wie aus der Figur 1 außerdem noch hervorgeht wird der "Führungsschacht" der Datenkarten 6 abgesehen vom Eingabe-/Ausgabeschlitz 5 von sich gegenüberliegenden an einer Leiterplatte 38 und am Boden 34 angebrachten Noppen 39/40 bzw. 41/42, mit Schlitzen versehenen Führungskörpern 43 und 44 und von den Schenkeln 45 und 46 der Schwinge 4 gebildet. Mit 47 und 48 bezeichnete Bauelemente bilden die Endanschläge für eine eingegebene Datenkarte 6 in der Lese/Schreibposition. Ein der Datenübertragung dienender Kontaktsatz 49 ist an der bereits erwähnten, dem "Führungsschacht" parallel zugeordneten Leiterplatte 38 befestigt. Als zusätzliche Stütze im Bereich des Kontaktsatzes 49 dient ein bodenseitig angeordneter Noppen 50.

Es sei noch hervorgehoben, daß die Schwinge 4 im wesentlichen in der Ebene des "Führungsschachtes" gelagert ist. Hierzu dienen an den Schenkeln 45, 46 angeformte Lagerzapfen 51 und 52. Ferner ist ein die Schenkel 45, 46 verbindender Steg 53 in Richtung des Eingabe-/Ausgabeschlitzes keilförmig ausgebildet. Auf der Gegenseite schließt der Steg 53 mit einer rechtwinklig zur Führungsebene stehenden Wand 54 ab.

Die Funktion der Datenkartenaufnahme 1 ist folgende:

In der in der Figur 2 dargestellten Funktionsstellung befindet sich die Datenkartenaufnahme 1 in einer Bereitschaftsstellung. Das heißt, wird eine Datenkarte 6 in die Datenkartenaufnahme 1 eingeführt und, damit sie der eingebenden Hand entnommen und selbsttätig weitertransportiert werden kann, bis zu den Transportrollen 8 und 9 vorgesteckt, wird die Schwinge 4 verschwenkt und der Motor 12 durch Betätigen der Lichtschranke 28 mittels der Achse 27 angesteuert. Dabei treibt der Motor 12 die Übertragungswelle 13 und damit die Schnecke 17 in Pfeilrichtung A an. Die Schnecke 17 stützt sich dabei aufgrund der Haftreibung zwischen den Transportrollen 8, 9 und der eingesteckten Datenkarte 6 an der Schulter 55 der Übertragungswelle 13 ab und treibt über das Zahnradpaar 18/19 und das Zwischenrad 20 das Zahnrad 21 und somit die Welle 7 in der dargestellten Pfeilrichtung an. Dadurch wird die Datenkarte 6 gegen die Endanschläge 47, 48 transportiert und nachfolgend der Motor 12 abgeschaltet, wobei das Abschaltsignal beispielsweise durch Messen und Vergleichen der Stromaufnahmen des Motors 12 generiert wird.

Bezüglich des als zweiarmiger Hebel ausgebildeten Riegels 23 sei noch erwähnt, daß an ihm einerseits eine Aufgleitfläche 56 für das Kopfteil 22 der Schnecke 17 andererseits eine mit dem Stützkörper 37 zusammenwirkende Sperrfläche 57 ausgebildet sind. Die Übergangsrundung 58 ist so gestaltet, daß der Riegel 23 in der in Figur 2 dargestellten Stellung keine Sperrfunktion ausübt, das heißt, die Schwinge 4 bei der Eingabe der Datenkarte 6 verschwenkt werden kann, wobei sich der Riegel 23 in Pfeilrichtung auf der Achse 24 dreht. Ferner sei noch erwähnt, daß in dem in der Figur 2 dargestellten Funktionsstand die eine relativ steile Kennlinie aufweisende Schenkelfeder 25, deren einer Schenkel 59 an dem Riegel 23 angreift und deren anderer Schenkel 60 an dem Andruckelement 31 befestigt ist, weitgehend entspannt ist und erst durch das Verschwenken des Andruckelementes 31 beim Eingeben einer Datenkarte 6 gespannt wird. Dadurch wird, wenn die Datenkarte 6 die in der Figur 3 dargestellte Position, die Lese-/Schreibposition, erreicht hat und die Schwinge 4 unter der Wirkung der Federschenkel 35 wieder in ihre Ausgangslage an der Leiste 3 zurückschwenkt, der Riegel 23 in die in der Figur 3 dargestellte Sperrstellung verschwenkt. In diesem Funktionszustand befindet sich die Datenkarte 6 unzugänglich zwischen den Schenkeln 45, 46 und der Wand 54 des Steges 53 der Schwinge 4.

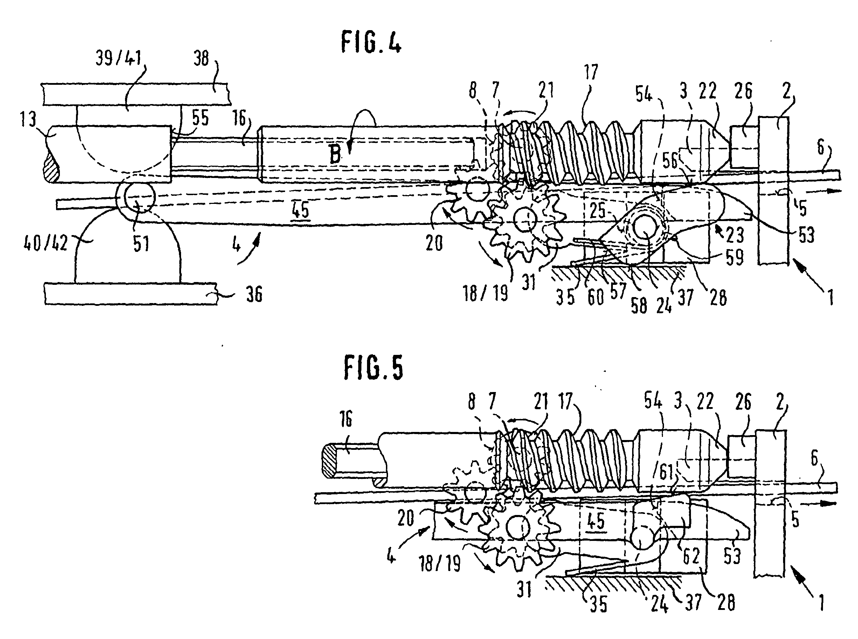

Soll die eingegebene Datenkarte 6 wieder ausgegeben werden, so muß dies beispielsweise durch Betätigen einer Taste ausgelöst werden. Das heißt, der Motor 12 wird durch eine Tastenbetätigung derart angesteuert, daß er die Übertragungswelle 13 in Pfeilrichtung B antreibt. In diesem Falle schraubt sich die Schnecke 17 aufgrund ihrer axialen Verschiebbarkeit auf dem Zahnrad 18, das aufgrund der erhöhten Haftreibung zwischen den Transportrollen 8 und 9 und der Datenkarte 6 ein erhöhtes Antriebsdrehmoment erfordert, entlang, bis sie an dem Anschlag 26 anliegt. Danach erfolgt die Mitnahme des Zahnradpaares 18/19, des Zwischenrades 20 und des gleichachsig mit den Transportrollen 8, 9 angeordneten Zahnrades 21 und somit die Ausgabe der Datenkarte 6. Diesen Funktionszustand zeigt die Figur 4. Bereits vor Erreichen dieses Funktionszustandes wurde durch die sich axial verschiebende Schnecke 17 der Riegel 23 verschwenkt und damit die Verriegelung der Schwinge 4 aufgehoben. Gleichzeitig erfolgte über den Riegel 23 auch eine Betätigung der Schwinge 4, das heißt, eine Freigabe des Eingabe/Ausgabeschlitzes 5. Nach Beendigung des Transports der Datenkarte 6 wird die Drehrichtung des Motors 12, ausgelöst beispielsweise durch einen Stromstärkenvergleich, umgesteuert, was ein Zurücklaufen der Schnecke 17 gegen die Schulter 55 der Übertragungswelle 13 und dabei ein Freigeben der Schwinge 4 zur Folge hat. Wird die Datenkarte 6 der Datenkartenaufnahme 1 nicht sofort entnommen, so ist die Datenkarte 6 gegen Herausfallen aus dem Eingabe-/Ausgabeschlitz dadurch gesichert, daß sie durch die unter der Wirkung der Federschenkel 35 stehende Schwinge 4 an der Leiste 3 festgehalten wird. Nach der Vollständigen Entnahme der Datenkarte 6 ist die Datenkartenaufnahme 1 wieder in der in Figur 2 dargestellten Bereitschaftsstellung, bei der der Eingabe-/Ausgabeschlitz durch die Schwinge 4 zumindest staubdicht verschlossen ist.

Mit der Figur 5 ist eine Ausführung der Erfindung dargestellt, bei der lediglich der Prinzipgedanken verwirklicht ist. Das heißt, die Verwendung einer Verriegelung der Schwinge 4 mittels eines gefedert gelagerten Riegels ist nicht vorgesehen, was ohne wesentliche Nachteile in Kauf nehmen zu müssen die Datenkartenaufnahme 1 verbilligt und Funktionsstörungen verringert. Die mit der Schnecke 17 bzw. mit dem Kopfteil 22 zusammenwirkende Aufgleitfläche 61 ist in diesem Falle an einem an der Schwinge 4 unmittelbar angeformten Flügel 62 ausgebildet.

## Patentansprüche

1. Flach bauende Datenkartenaufnahme mit einem in der Frontwand befindlichen Eingabe-/Ausgabeschlitz und mit einer Vorrichtung zum Verschließen des Eingabe/Ausgabeschlitzes, wobei die Vorrichtung zum Verschließen ein gefedert gelagertes Verschlusselement (4) aufweist, mit Transportrollen (8, 9) und diesen zugeordneten Andruckelementen (31, 32) für den Transport der Datenkarten (6) zwischen einer Eingabe-/Entnahmeposition und einer Lese-/Schreibposition, einem die Transportrollen (8, 9) antreibenden Motor (12) und in getrieblicher Verbindung mit dem Motor (12) stehende Mittel zum Betätigen des Verschlusselementes (4) und in der getrieblichen Verbindung zwischen dem Motor (12) und den Transportrollen (8, 9) ein in Bewegungsrichtung der Datenkarte (6) axial verschiebbares Getriebeelement angeordnet ist, **dadurch gekennzeichnet, dass** das Verschlusselement (4) im Wesentlichen in der Führungsebene der Datenkarten (6) gefedert gelagert und als Schwinge ausgebildet ist und dass an dem Verschlusselement (4) eine dem axial verschiebbaren Getriebeelement zugeordnete Aufgleitfläche (56, 61) ausgebildet ist.

2. Flach bauende Datenkartenaufnahme nach Anspruch 1, **dadurch gekennzeichnet, dass** das Verschlusselement (4) in der Datenkartenaufnahme angeordnet ist, in Richtung des Eingabe-/Ausgabeschlitzes (5) keilförmig ausgebildet ist und in Richtung einer in der Datenkartenaufnahme (1) befindlichen Datenkarte (6) eine parallel zur Stirnfläche der Datenkarte (6) liegende Wand (54) aufweist.

3. Flach bauende Datenkartenaufnahme nach Anspruch 1, **dadurch gekennzeichnet, dass** das axial verschiebbare Getriebeelement als Schnecke (17) ausgebildet ist.

4. Flach bauende Datenkartenaufnahme nach Anspruch 1, **dadurch gekennzeichnet, dass** ein mittels des Verschlusselementes (4) betätigter, den Motor (12) steuernder Schalter (28) vorgesehen ist.

5. Flach bauende Datenkartenaufnahme nach Anspruch 1, **dadurch gekennzeichnet, dass** die Andruckelemente (31, 32) auf an dem Verschlusselement (4) ausgebildeten Achsen (29, 30) gelagert sind und dass an den Andruckelementen (31, 32) Federschenkel (35) angeformt sind, die sich an dem Gehäuseboden (36) der Datenkartenaufnahme (1) abstützen.

6. Flach bauende Datenkartenaufnahme nach Anspruch 1, **dadurch gekennzeichnet, dass** an der Frontwand (2) des Gehäuses der Datenkartenaufnahme (1) eine nach innen weisende Leiste (3) ausgebildet ist und dass das Verschlusselement (4) unter der Wirkung der Federschenkel (35) der Andruckelemente (31, 32) an der Leiste (3) anliegt.

7. Flach bauende Datenkartenaufnahme nach Anspruch 1, **dadurch gekennzeichnet, dass** dem Verschlusselement (4) ein Riegel (23) zugeordnet ist, dass der Riegel (23)durch die Schnecke (17) betätigbar ist und dass an dem Riegel (23) eine Feder derart angreift, dass der Riegel (23) bei in die Datenkartenaufnahme (1) eingegebener Datenkarte (6) ein Verschwenken des Verschlusselementes (4) sperrt.

8. Flach bauende Datenkartenaufnahme nach Anspruch 7, **dadurch gekennzeichnet, dass** der Riegel (23) als zweiarmiger Hebel ausgebildet und auf einer an dem Verschlusselement (4) angeformten Achse (24) gelagert ist und dass an dem einen Arm des Riegels (23) eine dem axial verschiebbaren Getriebeelement zugeordnete Aufgleitfläche (56), an dem anderen Arm eine mit dem Gehäuseboden (36) der Datenkartenaufnahme (1) zusammenwirkende Sperrfläche (57) ausgebildet sind.

9. Flach bauende Datenkartenaufnahme nach Anspruch 7, **dadurch gekennzeichnet, dass** als Feder eine Schenkelfeder (25) vorgesehen ist, deren einer Schenkel (59) an dem Riegel (23) angreift und dessen anderer Schenkel (60) mit dem Andruckelement (31) verbunden ist.

## Claims

1. Thin receptacle for data cards with an insertion/withdrawal slot located in the front wall and with a device for closing the insertion/withdrawal slot, the device for closing having a spring-mounted closing element (4), with transport rollers (8, 9) and, assigned to the latter, pressure-exerting elements (31, 32) for transporting the data cards (6) between an insertion/withdrawal position and a reading/writing position, a motor (12) driving the transport rollers (8, 9), and means which are in kinematic connection with the motor (12) for actuating the closing element (4) and a kinematic element which is axially displaceable in the direction of movement of the data card (6) and is arranged in the kinematic connection between the motor (12) and the transport rollers (8, 9), **characterized in that** the closing element (4) is spring-mounted substantially in the guiding plane of the data cards (6) and is formed as a rocker and **in that** a sliding surface (56, 61) assigned to the axially displaceable kinematic element is formed on the closing element (4).

2. Thin receptacle for data cards according to Claim 1, **characterized in that** the closing element (4) is arranged in the data card receptacle, is formed in the shape of a wedge in the direction of the insertion/withdrawal slot (5) and has in the direction of a data card (6) located in the data card receptacle (1) a wall (54) lying parallel to the end face of the data card (6).

3. Thin receptacle for data cards according to Claim 1, **characterized in that** the axially displaceable kinematic element is formed as a worm (17).

4. Thin receptacle for data cards according to Claim 1, **characterized in that** a switch (28) which is actuated by means of the closing element (4) and controls the motor (12) is provided.

5. Thin receptacle for data cards according to Claim 1, **characterized in that** the pressure-exerting elements (31, 32) are mounted on spindles (29, 30) formed on the closing element (4) and **in that** spring legs (35) which are supported on the housing base (36) of the data card receptacle (1) are integrally formed on the pressure-exerting elements (31, 32).

6. Thin receptacle for data cards according to Claim 1, **characterized in that** an inwardly facing strip (3) is formed on the front wall (2) of the housing of the data card receptacle (1) and **in that** the closing element (4) lies against the strip (3) under the action of the spring legs (35) of the pressure-exerting elements (31, 32).

7. Thin receptacle for data cards according to Claim 1, **characterized in that** the closing element (4) is assigned a bolt (23), **in that** the bolt (23) can be actuated by the worm (17) and **in that** a spring acts on the bolt (23) in such a way that the bolt (23) blocks pivoting of the closing element (4) when a data card (6) is inserted into the data card receptacle (1).

8. Thin receptacle for data cards according to Claim 7, **characterized in that** the bolt (23) is formed as a two-armed lever and is mounted on a spindle (24) integrally formed on the closing element (4) and **in that** a sliding surface (56) assigned to the axially displaceable kinematic element is formed on the one arm of the bolt (23), a blocking surface (57) interacting with the housing base (36) of the data card receptacle (1) is formed on the other arm.

9. Thin receptacle for data cards according to Claim 7, **characterized in that** the spring is provided in the form of a leg spring (25), the one leg (59) of which acts on the bolt (23) and the other leg (60) of which is connected to the pressure-exerting element (31).

## Revendications

1. Réceptacle de faible épaisseur à plat pour cartes de données, comportant une fente d'introduction/évacuation se trouvant dans la paroi avant et un dispositif pour fermer la fente d'introduction/évacuation, le dispositif de fermeture comprenant un élément (4) de fermeture monté sur ressort, comportant des galets (8, 9) d e transport et d es éléments (31, 32) presseurs associés à ceux-ci pour le transport des cartes (6) de données entre une position d'introduction/enlèvement et une position de lecture/écriture, comportant un moteur (12) entraînant les galets (8, 9) de transport et des moyens se trouvant en liaison de transmission avec le moteur (12) pour actionner l'élément (4) de fermeture, un élément de transmission à translation axiale dans la direction de déplacement de la carte (6) de données étant disposé dans la liaison de transmission entre le moteur (12) et les galets (8, 9) de transport, **caractérisé en ce que** l'élément (4) de fermeture est monté sur ressort sensiblement dans le plan de guidage des cartes (6) de données et est réalisé sous forme de bielle oscillante, et **en ce qu'**une surface (56, 61) de rampe associée à l'élément de transmission à translation axiale est formée sur l'élément (4) de fermeture.

2. Réceptacle de faible épaisseur à plat pour cartes de données suivant la revendication 1, **caractérisé en ce que** l'élément (4) de fermeture est disposé dans le réceptacle pour cartes de données, est réalisé cunéiforme en direction de la fente (5) d'introduction/évacuation et comporte, en direction d'une carte (6) de données se trouvant dans le réceptacle (1) pour cartes de données, une paroi (54) parallèle à la face frontale de la carte (6) de données.

3. Réceptacle de faible épaisseur à plat pour cartes de données suivant la revendication 1, **caractérisé en ce que** l'élément de transmission à translation axiale est réalisé sous forme de vis (17) sans fin.

4. Réceptacle de faible épaisseur à plat pour cartes de données suivant la revendication 1, **caractérisé en ce qu'**il est prévu un commutateur (28), commandant le moteur (12) en étant actionné au moyen de l'élément (4) de fermeture.

5. Réceptacle de faible épaisseur à plat pour cartes de données suivant la revendication 1, **caractérisé en ce que** les éléments (31, 32) presseurs sont montés sur des axes (29, 30) formés sur l'élément (4) de fermeture, et en ce q ue des branches (35) d e ressort sont formées sur les éléments (31, 32) presseurs, lesquelles s'appuient contre le fond (36) de boîtier du réceptacle (1 ) pour cartes de données.

6. Réceptacle de faible épaisseur à plat pour cartes de données suivant la revendication 1, **caractérisé en ce qu'**une bordure (3) dirigée vers l'intérieur est formée sur la paroi (2) avant du boîtier du réceptacle (1) pour cartes de données, et **en ce que** l'élément (4) de fermeture s'applique contre la bordure (3) sous l'action des branches (35) de ressort des éléments (31, 32) presseurs.

7. Réceptacle de faible épaisseur à plat pour cartes de données suivant la revendication 1, **caractérisé en ce qu'**un élément (23) de verrouillage est associé à l'élément (4) de fermeture, **en ce que** l'élément (23) de verrouillage peut être actionné par la vis (17) sans fin et **en ce qu'**un ressort agit sur l'élément (23) de verrouillage de telle sorte que l'élément (23) de verrouillage empêche un pivotement de l'élément (4) de fermeture lorsque la carte (6) de données est introduite d ans le réceptacle (1) pour cartes de données.

8. Réceptacle de faible épaisseur à plat pour cartes de données suivant la revendication 7, **caractérisé en ce que** l'élément (23) de verrouillage est réalisé sous forme de levier à deux bras et est monté sur un axe (24) formé sur l'élément (4) de fermeture, et **en ce qu'**une surface (56) de rampe associée à l'élément de transmission à t ranslation axiale est formée sur le premier bras de l'élément (23) de verrouillage, et une surface (57) de verrouillage coopérant avec le fond (36) de boîtier du réceptacle (1) pour cartes de données est formée sur l'autre bras.

9. Réceptacle de faible épaisseur à plat pour cartes de données suivant la revendication 7, **caractérisé en ce qu'**il est prévu comme ressort un ressort (25) à branches dont une branche (59) agit sur l'élément (23) de verrouillage et dont l'autre branche (60) est reliée à l'élément (31) presseur.
